# FASCICULE DE BREVET EUROPEEN

(11) **EP 2 707 231 B1**
(45) Date de publication et mention de la délivrance du brevet: **08.07.2015**
(21) Numéro de dépôt: 12718249.1
(22) Date de dépôt: 04.05.2012
(51) Int. Cl.: B60C 1/00, B60C 9/18, B60C 11/00, C08F 293/00

(54) **PNEUMATIQUE DONT LA ZONE SOMMET EST POURVUE D'UNE SOUS-COUCHE COMPORTANT UN ELASTOMERE THERMOPLASTIQUE**
REIFEN MIT EINEM ZENITBEREICH MIT EINER UNTERSCHICHT MIT EINEM THERMOPLASTISCHEN ELASTOMER
TYRE HAVING A CROWN REGION PROVIDED WITH AN UNDERLAYER COMPRISING A THERMOPLASTIC ELASTOMER

(30) Priorité: 12.05.2011 FR 1154094
(43) Date de publication de la demande: 19.03.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ABAD, Vincent, F-63040 Clermont-Ferrand Cedex 9 (FR); CUSTODERO, Emmanuel, F-63040 Clermont-Ferrand Cedex 9 (FR)
(74) Mandataire: Sidhu, Alban
(86) Numéro de dépôt international: PCT/EP2012/058236
(87) Numéro de publication internationale: WO 2012/152688

(56) Documents cités:
- WO-A1-2009/156049
- FR-A1- 2 947 275
- FR-A1- 2 948 320
- DATABASE WPI Week 200877 Thomson Scientific, London, GB; AN 2008-N09902 XP002664514, & JP 2007 223480 A (TOYO RUBBER IND CO LTD) 6 septembre 2007 (2007-09-06)
- DATABASE WPI Week 201061 Thomson Scientific, London, GB; AN 2010-K57173 XP002664515, & JP 2010 185025 A (YOKOHAMA RUBBER CO LTD) 26 août 2010 (2010-08-26)

## Description

La présente invention est relative aux couches d'élastomères utilisées dans le sommet (« *crown* ») des pneumatiques et aux compositions à base d'élastomères thermoplastiques (TPE), utilisées pour la fabrication de tels pneumatiques.

Un objectif constant des manufacturiers de pneumatique est d'augmenter la rigidité de dérive des pneumatiques, notamment par l'incorporation d'une sous-couche de forte rigidité sous la bande de roulement. La rigidité de cette sous-couche permet de manière connue d'améliorer le comportement routier (« *handling* ») des pneumatiques.

Dans ce but, la demanderesse a trouvé de manière surprenante qu'un pneumatique pourvu d'une sous-couche spécifique permettait d'obtenir une rigidité de dérive augmentée.

L'invention a pour objet un pneumatique radial pour véhicule automobile, comportant :
∘ un sommet comportant une bande de roulement pourvue d'au moins une partie radialement externe destinée à entrer au contact de la route ;
∘ deux bourrelets inextensibles, deux flancs reliant les bourrelets à la bande de roulement, une armature de carcasse passant dans les deux flancs et ancrée dans les bourrelets ;
∘ une armature de sommet ou ceinture disposée circonférentiellement entre la partie radialement externe de la bande de roulement et l'armature de carcasse ;
∘ une couche élastomère radialement interne dite « sous-couche », de formulation différente de la formulation de la partie radialement externe de la bande de roulement, cette sous-couche étant elle-même disposée circonférentiellement entre la partie radialement externe de la bande de roulement et l'armature de carcasse,
caractérisé en ce que ladite sous-couche comprend au moins un élastomère thermoplastique, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère).

La composition de cette sous-couche permet d'obtenir une rigidité de dérive augmentée. Par ailleurs, il est difficile d'atteindre cet objectif sans pénaliser trop fortement la résistance au roulement puisque une augmentation de rigidité s'accompagne en général d'une augmentation de l'hystérèse, et inversement, la diminution de l'hystérèse suppose bien souvent une perte en rigidité. Les compositions de sous-couche des pneumatiques selon l'invention permettent d'augmenter la rigidité de dérive sans augmentation notable de l'hystérèse.

De préférence, l'invention concerne un pneumatique tel que défini ci-dessus, dans lequel la masse moléculaire moyenne en nombre de l'élastomère thermoplastique est comprise entre 30 000 et 500 000 g/mol.

Plus préférentiellement, l'invention concerne un pneumatique tel que défini ci-dessus, dans lequel le ou les blocs élastomères du copolymère bloc sont choisis parmi les élastomères ayant une température de transition vitreuse inférieure à 25°C ; préférentiellement choisis dans le groupe constitué par les élastomères éthyléniques, les élastomères diéniques et leurs mélanges, plus préférentiellement parmi les élastomères diéniques.

Plus préférentiellement encore, l'invention concerne un pneumatique tel que défini ci-dessus, dans lequel le ou les blocs élastomères du copolymère bloc sont des élastomères diéniques issus de l'isoprène, du butadiène ou d'un mélange de ces derniers.

De préférence, l'invention concerne un pneumatique tel que défini ci-dessus, dans lequel le ou les blocs thermoplastiques du copolymère bloc sont choisis parmi les polymères ayant une température de transition vitreuse supérieure à 80°C et, dans le cas d'un bloc thermoplastique semi cristallin, une température de fusion supérieure à 80°C ; et notamment, le ou les blocs thermoplastiques du copolymère bloc sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques et leurs mélanges ; et plus préférentiellement, le ou les blocs thermoplastiques du copolymère bloc sont choisis parmi les polystyrènes.

De préférence également, l'invention concerne un pneumatique tel que défini ci-dessus, dans lequel le ou les élastomères thermoplastiques sont choisis dans le groupe constitué par les élastomères thermoplastiques styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Selon un mode préférentiel, l'invention concerne un pneumatique tel que défini ci-dessus, dans lequel l'élastomère thermoplastique est le seul élastomère de la sous-couche.

Selon un autre mode préférentiel, l'invention concerne un pneumatique tel que défini ci-dessus, dans lequel la sous-couche comprend en outre un élastomère non thermoplastique à un taux d'au plus 35 pce.

Préférentiellement, l'invention concerne un pneumatique tel que défini ci-dessus, dans lequel la sous-couche comprend en outre au moins un polymère thermoplastique autre qu'un élastomère, qui est préférentiellement choisi parmi les polymères de poly(para-phénylène éther). De préférence, le taux de polymère thermoplastique est inférieur à 40 pce.

L'invention concerne plus particulièrement les pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

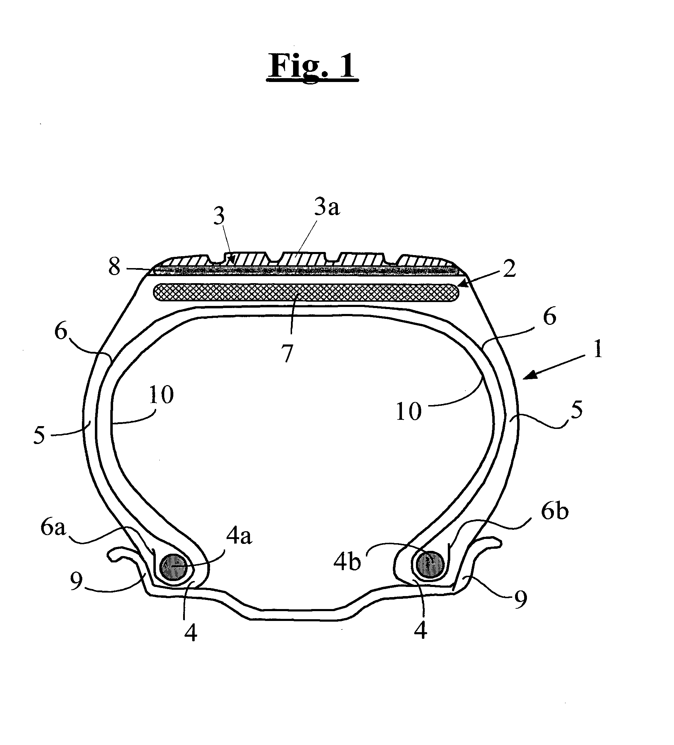

L'invention ainsi que ses avantages seront aisément compris à la lumière de la description et des exemples de réalisation qui suivent, ainsi que des figures 1 à 2 relatives à ces exemples qui schématisent, en coupe radiale, des exemples de pneumatiques radiaux conformes à l'invention.

### DESCRIPTION DETAILLEE DE L'INVENTION

Dans la présente description, sauf indication expresse différente, tous les pourcentages (%) indiqués sont des pourcentages en masse.

Au sens de la présente invention, la sous-couche est disposée circonférentiellement à l'intérieur du sommet du pneumatique, entre d'une part la partie la plus radialement externe de sa bande de roulement, c'est-à-dire la portion destinée à entrer au contact de la route lors du roulage, et d'autre part l'armature de sommet. Par sous-couche, on entend donc toute partie en caoutchouc radialement extérieure à l'armature de sommet du pneumatique qui ne donne pas sur l'extérieur du bandage pneumatique, qui est sans contact avec l'air ou un gaz de gonflage, en d'autres termes qui est donc située à l'intérieur même de la bande de roulement ou entre cette dernière et la ceinture (ou armature de sommet) du pneumatique.

Il faut donc comprendre que cette sous-couche peut être disposée:
- soit dans la bande de roulement elle-même, mais dans ce cas radialement sous la portion sculptée (c'est-à-dire radialement intérieurement par rapport à cette portion) de bande de roulement qui est destinée à entrer au contact de la route lors du roulage du pneumatique, tout au long de la durée de vie de ce dernier ;
- soit sous la bande de roulement (c'est-à-dire radialement intérieurement par rapport à cette bande de roulement), entre la bande de roulement et la ceinture (ou armature de sommet).

Préférentiellement, cette sous-couche est l'unique couche se situant entre la bande de roulement et l'armature de sommet, ou bien se situant à l'intérieur de la bande de roulement.

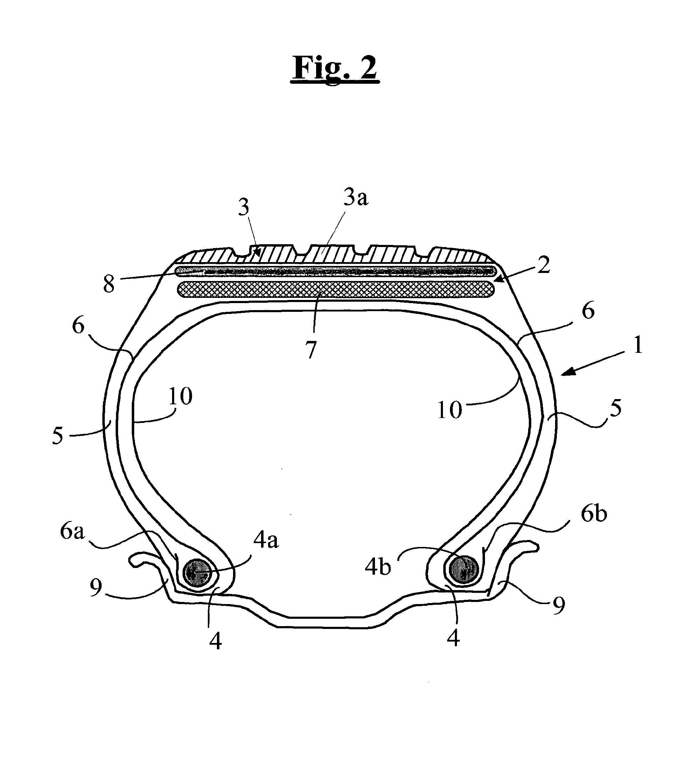

Les figures 1 et 2 annexées représentent en coupe radiale, de manière très schématique (notamment sans respect d'une échelle spécifique), deux exemples préférentiels de bandages pneumatiques pour véhicule automobile à armature de carcasse radiale, conformes à l'invention.

La figure 1 illustre un premier mode possible de réalisation de l'invention, selon lequel la sous-couche (8) est intégrée à la bande de roulement (3) elle-même, mais disposée sous la portion (3a) de la bande de roulement qui est destinée à entrer au contact de la route lors du roulage, pour constituer ce que l'on a coutume d'appeler une sous-couche d'une bande de roulement. On peut rappeler aussi que, dans un tel cas, la bande de roulement est aussi communément appelée par l'homme du métier bande de roulement à structure "*cap-base*", le terme "*cap*" désignant la portion sculptée de la bande de roulement destinée à entrer au contact de la route et le terme "*base*" désignant la portion non sculptée de la bande de roulement, de formulation différente, qui n'est quant à elle pas destinée à entrer au contact de la route.

Sur cette figure 1, le bandage pneumatique (1) schématisé comporte un sommet (2) comportant une bande de roulement (3) (pour simplifier, comportant une sculpture très simple) dont la partie radialement externe (3a) est destinée à entrer au contact de la route, deux bourrelets inextensibles (4) dans lesquels est ancrée une armature de carcasse (6). Le sommet (2), réuni auxdits bourrelets (4) par deux flancs (5), est de manière connue en soi renforcé par une armature de sommet ou "ceinture" (7) au moins en partie métallique et radialement externe par rapport à l'armature de carcasse (6).

Plus précisément, une ceinture de pneumatique est généralement constituée d'au moins deux nappes de ceinture superposées, dites parfois nappes "de travail" ou nappes "croisées", dont les éléments de renforcement ou "renforts" sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneumatique considéré. Chacune de ces deux nappes croisées est constituée d'une matrice de caoutchouc ou "gomme de calandrage" enrobant les renforts. Dans la ceinture, les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Pour le renforcement des ceintures ci-dessus, en particulier de leurs nappes croisées, nappes de protection ou nappes de frettage, on utilise généralement des renforts sous forme de câbles d'acier ("*steel cords*") ou des câblés textiles ("*textile cords*") constitués de fils fins assemblés entre eux par câblage ou retordage.

L'armature de carcasse (6) est ici ancrée dans chaque bourrelet (4) par enroulement autour de deux tringles (4a, 4b), le retournement (6a, 6b) de cette armature (6) étant par exemple disposé vers l'extérieur du pneumatique (1) qui est ici représenté monté sur sa jante (9). L'armature de carcasse (6) est constituée d'au moins une nappe renforcée par des câbles textiles radiaux, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 7). Bien entendu, ce pneumatique (1) comporte en outre de manière connue une couche (10) de gomme ou élastomère intérieure (communément appelée " gomme intérieure " ou " *inner liner* ") qui définit la face radialement interne du pneumatique et qui est destinée à protéger la nappe de carcasse de la diffusion d'air provenant de l'espace intérieur au pneumatique.

Cet exemple de pneumatique (1) conforme à l'invention de la figure 1 est caractérisé en ce que la partie base (8) de sa bande de roulement (3) est constituée par la sous-couche qui est décrite en détail dans ce qui suit.

La figure 2 illustre un autre mode possible de réalisation de l'invention, selon lequel la sous-couche (8) est externe à la bande de roulement (i.e., distincte de cette dernière), disposée cette fois, toujours dans le sommet (2), en dessous de la bande de roulement (i.e., radialement intérieurement par rapport à cette dernière) et au-dessus de la ceinture (i.e., radialement extérieurement par rapport à cette dernière), en d'autres termes entre la bande de roulement (3) et la ceinture (7).

Dans tous les cas schématisés par les figures commentées ci-dessus, la sous-couche, grâce à ses propriétés de rigidité de dérive améliorée, est susceptible de contribuer à un meilleur comportement (« *handling* ») des véhicules munis de tels pneumatiques.

Cette sous-couche a préférentiellement une épaisseur comprise entre 0,2 et 3 mm, plus préférentiellement comprise entre 0,5 et 2,5 mm, et encore plus préférentiellement comprise entre 1 et 2,5 mm.

Par ailleurs, le terme « pce » (en anglais « phr ») signifie au sens de la présente demande de brevet, partie en poids pour cent parties d'élastomère, thermoplastiques et non thermoplastiques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### 1. Composition de la sous-couche

Le pneumatique selon l'invention a pour caractéristique essentielle d'être pourvu d'une couche élastomère dite « sous-couche » de formulation différente de la portion externe, sculptée, de la bande de roulement, ladite sous-couche comprenant au moins un élastomère thermoplastique, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère).

### 1.1. Elastomère thermoplastique (TPE)

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre de l'invention est un copolymère à blocs dont la nature chimique des blocs thermoplastiques et élastomères peut varier.

### 1.1.1. Structure du TPE

La masse moléculaire moyenne en nombre (notée Mn) du TPE est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour sous-couche de pneumatique.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel «WATERS 2410» et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la sous-couche lors d'une utilisation à très basse température ; pour une telle utilisation, la Tg du TPE est plus préférentiellement encore inférieure ou égale à -10°C. De manière préférentielle également, la Tg du TPE est supérieure à -100°C.

De manière connue, les TPE présentent deux pics de température de transition vitreuse (Tg, mesurée selon ASTM D3418), la température la plus basse, étant relative à la partie élastomère du TPE, et la température la plus haute, étant relative à la partie thermoplastique du TPE. Ainsi, les blocs souples des TPE se définissent par une Tg inférieure à la température ambiante (25°C), tandis que les blocs rigides ont une Tg supérieure à 80°C.

Pour être de nature à la fois élastomère et thermoplastique, le TPE doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères - blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

### 1.1.2. Nature des blocs élastomères

Les blocs élastomères du TPE pour les besoins de l'invention, peuvent être tous les élastomères connus de l'homme de l'art. Ils possèdent généralement une Tg inférieure à 25°C, préférentiellement inférieure à 10°C, plus préférentiellement inférieure à 0°C et très préférentiellement inférieure à - 10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère du TPE est de préférence composé majoritairement d'unités éthyléniques. Par majoritairement, on entend un taux pondéral en monomère éthylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en C₄ - C₁₄ peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Dans le cas des blocs élastomères insaturés, ce bloc élastomère du TPE est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en C₄ - C₁₄ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle).

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en sous-couche de pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

Pour les besoins de l'invention, si ladite sous-couche doit être vulcanisée, ou covulcanisée avec une couche adjacente, typiquement une bande de roulement et/ou une armature de sommet, le bloc élastomère du TPE comportera préférentiellement des doubles liaisons carbone - carbone. Il s'agit préférentiellement d'un bloc élastomère insaturé, formant ainsi un TPE dit TPE insaturé.

### 1.1.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de l'invention, les élastomères TPE comprennent un ou plusieurs bloc(s) thermoplastique(s) ayant de préférence une Tg (ou Tf, le cas échéant) supérieure ou égale à 80°C et constitué(s) à partir de monomères polymérisés. Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La proportion des blocs thermoplastiques par rapport au TPE, tel que défini pour la mise en oeuvre de l'invention, est déterminée d'une part par les propriétés de thermoplasticité que doit présenter ledit copolymère. Les blocs thermoplastiques ayant une Tg (ou Tf, le cas échéant) supérieure ou égale à 80°C sont préférentiellement présents dans des proportions suffisantes pour préserver le caractère thermoplastique de l'élastomère selon l'invention. Le taux minimum de blocs thermoplastiques ayant une Tg (ou Tf, le cas échéant) supérieure ou égale à 80°C dans le TPE peut varier en fonction des conditions d'utilisation du copolymère. D'autre part, la capacité du TPE à se déformer lors de la préparation du pneu peut également contribuer à déterminer la proportion des blocs thermoplastiques ayant une Tg (ou Tf, le cas échéant) supérieure ou égale à 80°C.

Les blocs thermoplastiques ayant une Tg (ou Tf, le cas échéant) supérieure ou égale à 80°C peuvent être constitués à partir de monomères polymérisés de diverse nature, notamment, ils peuvent constituer les blocs suivants ou leurs mélanges :
- les polyoléfines (polyéthylène, polypropylène) ;
- les polyuréthannes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 80°C peuvent aussi être obtenus à partir de monomères choisis parmi les composés suivants et leurs mélanges :
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'obromostyrène, le m-bromostyrène, le p-bromostyrène, le 2,4-dibromostyrène, le 2,6-dibromostyrène ou les 2,4,6-tribromostyrène), les fluorostyrènes (par exemple l'ofluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité de la sous-couche peut être affectée. Pour ces raisons, le taux de styrène est plus préférentiellement compris entre 10% et 40%.

Selon une variante de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en sous-couche de pneumatique.

Le bloc thermoplastique peut également être constitué de plusieurs blocs thermoplastiques tels que définis ci-dessus.

### 1.1.4. Exemples de TPE

Par exemple, le TPE est un copolymère dont la partie élastomère est saturée, et comportant des blocs styrènes et des blocs alkylènes. Les blocs alkylènes sont préférentiellement de l'éthylène, du propylène ou du butylène. Plus préférentiellement, cet élastomère TPE est choisi dans le groupe suivant, constitué de copolymères diblocs, triblocs linéaires ou étoilés : styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS) et les mélanges de ces copolymères.

Selon un autre exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, cet élastomère TPE est choisi dans le groupe suivant, constitué de copolymères diblocs, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

Parmi les TPE multiblocs, on peut citer les copolymères comportant des blocs copolymère statistique d'éthylène et de propylène/ polypropylène, polybutadiène/ polyuréthane (TPU), polyéther/ polyester (COPE), polyéther/ polyamide (PEBA).

Il est également possible que les TPE donnés en exemple ci-dessus soient mélangés entre eux au sein de la sous-couche selon l'invention.

A titre d'exemples d'élastomères TPE commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 ») ; ou les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOLT 166 » ou SBS étoilé commercialisés par Kraton sous la dénomination « D1184 ». On peut également citer les élastomères commercialisés par la société Dexco Polymers sous la dénomination de « Vector » (e.g. « Vector 4114 », « Vector 8508 »). Parmi les TPE multiblocs, on peut citer le TPE « Vistamaxx » commercialisé par la société Exxon ; le TPE COPE commercialisé par la société DSM sous le dénomination « Arnitel », ou par la société Dupont sous le dénomination « Hytrel », ou par la société Ticona sous le dénomination « Riteflex » ; le TPE PEBA commercialisé par la société Arkema sous le dénomination « PEBAX » ; le TPE TPU commercialisé par la société Sartomer sous le dénomination « TPU 7840 », ou par la société BASF sous le dénomination « Elastogran ».

### 1.1.5. Quantité de TPE

Si d'éventuels autres élastomères (non thermoplastiques) sont utilisés dans la composition, le ou les élastomères thermoplastiques (TPE) constituent la fraction majoritaire en poids ; ils représentent alors au moins 65%, de préférence au moins 70% en poids, plus préférentiellement au moins 75% en poids de l'ensemble des élastomères présents dans la composition élastomère. De manière préférentielle également, le ou les élastomères TPE représentent au moins 95% (en particulier 100%) en poids de l'ensemble des élastomères présents dans la composition élastomère.

Ainsi, la quantité totale d'élastomère TPE est comprise dans un domaine qui varie de 65 à 100 pce, préférentiellement de 70 à 100 pce et notamment de 75 à 100 pce. De manière préférentielle également, la composition contient de 95 à 100 pce d'élastomère TPE. Le ou les élastomères TPE sont préférentiellement le ou les seuls élastomères de la sous-couche.

### 1.2 Elastomère Non Thermoplastique

Le ou les élastomères thermoplastiques décrits précédemment sont suffisants à eux seuls pour que soit utilisable la sous-couche selon l'invention.

La composition de la sous-couche selon l'invention, peut comporter au moins un (c'est-à-dire un ou plusieurs) caoutchouc diénique à titre d'élastomère non thermoplastique, ce caoutchouc diénique pouvant être utilisé seul, ou en coupage avec au moins un (c'est-à-dire un ou plusieurs) autre caoutchouc ou élastomère non thermoplastique.

Le taux total d'élastomère non thermoplastique, optionnel, est compris dans un domaine variant de 0 à 35 pce, préférentiellement de 0 à 30 pce, plus préférentiellement de 0 à 25 pce, et plus préférentiellement encore de 0 à 5 pce. De manière préférentielle également, la sous-couche du pneumatique selon l'invention ne contient pas d'élastomère non thermoplastique.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication de la sous-couche du pneumatique selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

### 1.3. Charge nanométrique ou renforçante

L'élastomère thermoplastique décrit précédemment est suffisant à lui seul pour que soit utilisable la sous-couche selon l'invention.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Comme noirs de carbone conviennent notamment tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante, optionnelle, dans la composition (noir de carbone et/ou charge inorganique renforçante telle que silice) est compris dans un domaine de 0 à 20%, ce qui correspond à un taux de 0 à 50 pce pour une composition sans plastifiant. Préférentiellement la composition comprend moins de 30 pce de charge renforçante et plus préférentiellement moins de 10 pce. Selon une variante préférentielle de l'invention, la composition de la sous-couche ne contient pas de charge renforçante.

### 1.4. Additifs divers

La sous-couche décrite précédemment peut comporter par ailleurs les divers additifs usuellement présents dans les sous-couches connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure de l'objet pneumatique. De manière préférentielle, la sous-couche ne contient pas tous ces additifs en même temps et de manière encore plus préférentielle, la sous-couche ne contient aucun de ces agents.

Egalement et à titre optionnel, la composition de la sous-couche de l'invention peut contenir un système de réticulation connu de l'homme du métier. Préférentiellement, la composition ne contient pas de système de réticulation. De la même manière, la composition de la sous-couche de l'invention peut contenir une ou plusieurs charges micrométriques, inertes telles que les charges lamellaires connues de l'homme de l'art. De préférence, la composition de contient pas de charge micrométrique.

Optionnellement également, la composition de la sous-couche de l'invention peut contenir un agent plastifiant, tel qu'une huile d'extension (ou huile plastifiante) ou une résine plastifiante dont la fonction est de faciliter la mise en oeuvre de la sous-couche, particulièrement son intégration au pneumatique par un abaissement du module et une augmentation du pouvoir tackifiant. On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier. Par exemple, l'huile d'extension est choisie dans le groupe constitué par les huiles paraffiniques, telle qu'une huile paraffinique à basse viscosité (PABV). L'homme du métier saura, à la lumière de la description et des exemples de réalisation qui suivent, ajuster la quantité de plastifiant en fonction de l'élastomère TPE utilisé (comme indiqué précédemment) ; des conditions particulières d'usage du pneumatique muni de la sous-couche, et notamment en fonction de l'objet pneumatique dans lequel elle est destinée à être utilisée. Lorsque la composition en comprend, on préfère que le taux de plastifiant varie de 0 à 80 pce, plus préférentiellement de 0 à 50 pce, plus préférentiellement encore de 0 à 30 pce, et notamment moins de 10 pce, selon la Tg et le module visés pour la sous-couche. Selon une variante préférentielle de l'invention, la composition de la sous-couche ne contient pas de plastifiant.

Outre les élastomères précédemment décrits, la composition de la sous-couche peut aussi comporter, toujours selon une fraction pondérale minoritaire par rapport à l'élastomère blocs, des polymères autres que des élastomères, tels que par exemple des polymères thermoplastiques. Lorsqu'ils sont présents dans la composition, on préfère que le taux total de polymères thermoplastiques non élastomériques soit inférieur à 40 pce, préférentiellement compris entre 5 et 30 pce, et plus préférentiellement compris entre 10 et 25 pce. Ces polymères thermoplastiques peuvent être notamment les polymères de poly(para-phénylène éther) (noté en abrégé "PPE"). Ces polymères thermoplastiques PPE sont bien connus de l'homme du métier, ce sont des résines solides à température ambiante (20°C) compatibles avec les polymères styréniques, qui ont notamment utilisées pour augmenter la Tg d'élastomères TPE dont le bloc thermoplastique est un bloc styrénique (voir par exemple "Thermal, Mechanical and Morphological Analyses of Poly(2,6-dimethyl-1,4-phenylene oxide)lStyrene-Butadiene-Styrene Blends ", Tucker, Barlow and Paul, Macromolecules, 1988, 21, 1678-1685).

### 2. Préparation

Les élastomères TPE peuvent être mis en oeuvre de façon usuelle pour des TPE, par extrusion ou moulage, par exemple à partir d'une matière première disponible sous la forme de billes ou de granulés.

La sous-couche pour le pneumatique selon l'invention est préparée de façon usuelle, par exemple, par incorporation des différents composants dans une extrudeuse bi-vis, de façon à réaliser la fusion de la matrice et une incorporation de tous les ingrédients, puis utilisation d'une filière permettant de réaliser le profilé.

Cette sous-couche peut-être montée sur un pneumatique de manière usuelle, ledit pneumatique comprenant en plus de la sous-couche nécessaire pour les besoins de l'invention, une bande de roulement, un sommet et une armature de sommet, et préférentiellement, deux flancs et deux bourrelets, et une armature de carcasse ancrée aux deux bourrelets et s'étendant d'un flanc à l'autre.

### EXEMPLES DE RÉALISATION DE L'INVENTION

Des compositions de sous-couche pour pneumatique selon l'invention ont été préparées comme indiqué précédemment.

Des pneumatiques ont ensuite été préparés selon les méthodes habituelles, avec les constituants connus de l'homme du métier : une bande de roulement, une sous-couche, un sommet, deux flancs et deux bourrelets, une armature de carcasse ancrée aux deux bourrelets, et une armature de sommet, la sous-couche étant celle décrite pour les besoins de la présente invention.

Les propriétés des pneumatiques selon l'invention peuvent être évaluées par des tests effectués sur des pneumatiques ou à partir de tests sur des échantillons de composition de sous-couche comme indiqué ci-après.

### Tests de rigidité de dérive

Ces essais ont été conduits afin de mesurer la poussée de dérive de ces bandages pneumatiques ; on rappelle qu'une poussée de dérive (en anglais "*drift thrust*" ou "*cornering*") élevée offre aux bandages pneumatiques un très bon niveau de comportement routier ("*handling*") sur véhicule automobile.

Pour les besoins de ces essais, chaque bandage pneumatique testé est monté sur une roue de dimension adaptée et gonflé à sa pression de référence. On le fait rouler à une vitesse constante de 80 km/h sur une machine automatique appropriée (machine type "sol-plan" commercialisée par la société MTS). On fait varier la charge notée "Z", sous un angle de dérive de 1 degré, et on mesure de manière connue la rigidité ou poussée de dérive notée "D" (corrigée de la poussée à dérive nulle), en enregistrant à l'aide de capteurs l'effort transversal sur la roue en fonction de cette charge Z ; la poussée de dérive est la pente à l'origine de la courbe D(Z). Les résultats sont présentés en base 100, correspondant à la rigidité de dérive du témoin ; un résultat supérieur à 100 montrant ainsi une rigidité de dérive augmentée.

### EXEMPLE

Dans un premier temps, des pneumatiques conformes à l'invention ont été préparés comme indiqué précédemment et comparés à un pneumatique témoin muni d'une sous-couche usuelle préparée selon une méthode usuelle connue de l'homme de l'art. Les compositions des couches d'adhésion sont présentées dans le tableau 1 ci-dessous.

**Tableau 1**

| Composition n° | A-1 | A-2 | A-3 | A-4 |
|---|---|---|---|---|
| Caoutchouc naturel (1) | 60 | 0 | 0 | 0 |
| BR(2) | 40 | 0 | 0 | 0 |
| TPE 1 (3) | 0 | 100 | 80 | 100 |
| TPE 2 (4) | 0 | 0 | 20 | 0 |
| PPE (5) | 0 | 0 | 0 | 15 |
| Noir de carbone (6) | 60 | 0 | 0 | 0 |
| Agent anti-oxydant (7) | 1.5 | 0 | 0 | 0 |
| ZnO (8) | 3 | 0 | 0 | 0 |
| Acide stéarique(9) | 0.5 | 0 | 0 | 0 |
| CBS (10) | 1.5 | 0 | 0 | 0 |
| Soufre | 2.5 | 0 | 0 | 0 |

| | | | | |
|---|---|---|---|---|
| (1) Caoutchouc naturel peptisé ; (2) BR avec 4,3% de 1-2; 2,7% de trans ; 93% de cis 1-4 ; (Tg = -106°C) (3) Elastomère thermoplastique SBS linéaire « Europrene SOLT 166 » de la société Polimeri Europa ; (4) Elastomère thermoplastique SBS étoilé « D1184 » de la société Kraton ; (5) Poly(2,6-dimethyl-1,4-phenylene ether) SABIC Noryl SA120 ; (6) Noir de carbone N683 ; (7) N-1,3-diméthylbutyl-N-phénylparaphénylènediamine (« Santoflex 6-PPD » de la société Flexsys) ; (8) oxyde de zinc (grade industriel - société Umicore) ; (9) stéarine ( « Pristerene » de la société Uniquema); (10) N-cyclohexyl-2-benzothiazyl-sulfénamide (« Santocure CBS » de la société Flexsys). | | | | |

La composition A-1 est une composition usuelle de sous-couche, constituant ici le témoin, tandis que les compositions A-2, A-3 et A-4 correspondent à des compositions de sous-couche pour les besoins de l'invention. On peut noter dans ces compositions la grande économie de moyens, liée à l'utilisation d'élastomères TPE dans la composition de la sous-couche. En effet on note que l'élastomère TPE est suffisant à lui seul, comme seul composant de la composition de la sous-couche, pour que cette sous-couche soit utilisable selon l'invention

Les performances de l'invention ont ensuite été évaluées en pneu (205/55 R16). A cette fin, les pneumatiques B-2, B-3 et B-4 munis respectivement d'une sous-couche de composition A-2, A-3 et A-4 conformes à l'invention ont été comparés à un témoin B-1 muni d'une sous-couche usuelle de composition A-1, toutes les sous-couches ayant la même épaisseur de 2 mm. Ces pneumatiques ont été évalués en test de rigidité de dérive. Les résultats sont présentés dans le tableau 2.

**Tableau 2**

| *Pneumatique N°:* | *B-1* | *B-2* | *B-3* | *B-4* |
|---|---|---|---|---|
| *Formulation de la sous-couche* | *A-1* | *A-2* | *A-3* | *A-4* |
| *Rigidité de dérive (base 100)* | *100* | *105* | *104* | *110* |

Les résultats présentés au tableau 2 mettent en évidence que la sous-couche de composition A-2 selon l'invention permet, de manière inattendue, une amélioration notable de la rigidité de dérive des pneumatiques selon l'invention, par l'utilisation d'une sous-couche spécifique telle que définie précédemment. Par ailleurs, il est surprenant que le TPE seul, ou additionné d'un polymère thermoplastique, soit suffisant dans la composition pour que la sous-couche soit utilisable dans un pneumatique dont la rigidité de dérive est, de plus, améliorée.

## Revendications

1. Pneumatique radial (1) pour véhicule automobile, comportant :
o un sommet (2) comportant une bande de roulement (3) pourvue d'au moins une partie (3a) radialement externe destinée à entrer au contact de la route ;
o deux bourrelets inextensibles (4), deux flancs (5) reliant les bourrelets (4) à la bande de roulement (3), une armature de carcasse (6) passant dans les deux flancs (5) et ancrée dans les bourrelets (4) ;
o une armature de sommet ou ceinture (7) disposée circonférentiellement entre la partie (3a) radialement externe de la bande de roulement (3) et l'armature de carcasse (6) ;
o une couche élastomère radialement interne (8), dite « sous-couche », de formulation différente de la formulation de la partie radialement externe (3a) de la bande de roulement, cette sous-couche étant elle-même disposée circonférentiellement entre la partie (3a) radialement externe de la bande de roulement (3) et l'armature de sommet (7),
**caractérisé en ce que** ladite sous-couche comprend au moins un élastomère thermoplastique, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère).

2. Pneumatique selon la revendication 1, dans lequel la masse moléculaire moyenne en nombre de l'élastomère thermoplastique est comprise entre 30 000 et 500 000 g/mol.

3. Pneumatique selon l'une quelconque des revendications précédentes, dans lequel le ou les blocs élastomères du copolymère bloc sont choisis parmi les élastomères ayant une température de transition vitreuse inférieure à 25°C.

4. Pneumatique l'une quelconque des revendications précédentes dans lequel le ou les blocs élastomères du copolymère bloc sont choisis dans le groupe constitué par les élastomères éthyléniques, les élastomères diéniques et leurs mélanges.

5. Pneumatique l'une quelconque des revendications précédentes dans lequel le ou les blocs élastomères du copolymère bloc sont choisis parmi les élastomères diéniques.

6. Pneumatique la revendication 5 dans lequel le ou les blocs élastomères du copolymère bloc sont des élastomères diéniques issus de l'isoprène, du butadiène ou d'un mélange de ces derniers.

7. Pneumatique selon l'une quelconque des revendications précédentes dans lequel le ou les blocs thermoplastiques du copolymère bloc sont choisis parmi les polymères ayant une température de transition vitreuse supérieure à 80°C et, dans le cas d'un bloc thermoplastique semi cristallin, une température de fusion supérieure à 80°C.

8. Pneumatique selon l'une quelconque des revendications précédentes dans lequel le ou les blocs thermoplastiques du copolymère bloc sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et leurs mélanges.

9. Pneumatique selon l'une quelconque des revendications précédentes dans lequel le ou les blocs thermoplastiques du copolymère bloc sont choisis parmi les polystyrènes.

10. Pneumatique selon l'une quelconque des revendications précédentes dans lequel le ou les élastomères thermoplastiques sont choisis dans le groupe constitué par les élastomères thermoplastiques styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

11. Pneumatique selon l'une quelconque des revendications précédentes, dans lequel l'élastomère thermoplastique est le seul élastomère de la sous-couche.

12. Pneumatique selon l'une quelconque des revendications 1 à 10, dans lequel la sous-couche comprend en outre un élastomère non thermoplastique à un taux d'au plus 35 pce.

13. Pneumatique selon l'une quelconque des revendications précédentes, dans lequel la sous-couche comprend en outre au moins un polymère thermoplastique autre qu'un élastomère.

14. Pneumatique selon la revendication 13, dans lequel le polymère thermoplastique est choisi parmi les polymères de poly(para-phénylène éther).

15. Pneumatique selon l'une des revendications 13 ou 14, dans lequel le taux de polymère thermoplastique est inférieur à 40 pce.

## Patentansprüche

1. Radialreifen (1) für Kraftfahrzeug, umfassend:
∘ einen Scheitel (2), umfassend eine Lauffläche (3) mit mindestens einem radial äußeren Teil (3a), die dazu bestimmt ist, mit der Straße in Kontakt zu kommen;
∘ zwei nicht dehnbare Wülste (4), zwei Flanken (5), die die Wülste (4) mit der Lauffläche (3) verbinden, eine Karkassenbewehrung (6), die in die beiden Flanken (5) übergeht und in den Wülsten (4) verankert ist;
∘ eine Scheitelbewehrung oder einen Gürtel (7), die bzw. der umfänglich zwischen dem radial äußeren Teil (3a) der Lauffläche (3) und der Karkassenbewehrung (6) angeordnet ist;
∘ eine als "Unterschicht" bezeichnete radial innere Elastomerschicht (8) mit einer Formulierung, die von der Formulierung des radial äußeren Teils (3a) der Lauffläche verschieden ist, wobei diese Unterschicht umfänglich zwischen dem radial äußeren Teil (3a) der Lauffläche (3) und der Scheitelbewehrung (7) angeordnet ist,
**dadurch gekennzeichnet, dass** die Unterschicht mindestens ein thermoplastisches Elastomer umfasst, wobei es sich bei dem thermoplastischen Elastomer um ein Blockcopolymer mit mindestens einem elastomeren Block und mindestens einem thermoplastischen Block handelt und der Gesamtgehalt an thermoplastischem Elastomer in einem Bereich von 65 bis 100 phe (Gewichtsteile pro hundert Teile Elastomer) liegt.

2. Reifen nach Anspruch 1, wobei das zahlenmittlere Molekulargewicht des thermoplastischen Elastomers zwischen 30.000 und 500.000 g/mol liegt.

3. Reifen nach einem der vorhergehenden Ansprüche, wobei der elastomere Block bzw. die elastomeren Blöcke des Blockcopolymers aus Elastomeren mit einer Glasübergangstemperatur von weniger als 25°C ausgewählt ist bzw. sind.

4. Reifen nach einem der vorhergehenden Ansprüche, wobei der elastomere Block bzw. die elastomeren Blöcke des Blockcopolymers aus der Gruppe bestehend aus Ethylen-Elastomeren, Dien-Elastomeren und Mischungen davon ausgewählt ist bzw. sind.

5. Reifen nach einem der vorhergehenden Ansprüche, wobei der elastomere Block bzw. die elastomeren Blöcke des Blockcopolymers aus Dien-Elastomeren ausgewählt ist bzw. sind.

6. Reifen nach Anspruch 5, wobei es sich bei dem elastomeren Block bzw. den elastomeren Blöcken des Blockcopolymers um Dien-Elastomere aus Isopren, Butadien oder einer Mischung davon handelt.

7. Reifen nach einem der vorhergehenden Ansprüche, wobei der thermoplastische Block bzw. die thermoplastischen Blöcke des Copolymers aus Polymer mit einer Glasübergangstemperatur von mehr als 80°C und im Fall eines teilkristallinen thermoplastischen Blocks einer Schmelztemperatur von mehr als 80°C ausgewählt ist bzw. sind.

8. Reifen nach einem der vorhergehenden Ansprüche, wobei der thermoplastische Block bzw. die thermoplastischen Blöcke des Copolymers aus der Gruppe bestehend aus Polyolefinen, Polyurethanen, Polyamiden, Polyestern, Polyacetalen, Polyethern, Polyphenylensulfiden, Polyfluorverbindungen, Polystyrolen, Polycarbonaten, Polysulfonen, Polymethylmethacrylat, Polyetherimid, thermoplastischen Copolymeren und Mischungen davon ausgewählt ist bzw. sind.

9. Reifen nach einem der vorhergehenden Ansprüche, wobei der thermoplastische Block bzw. die thermoplastischen Blöcke des Copolymers aus Polystyrolen ausgewählt ist bzw. sind.

10. Reifen nach einem der vorhergehenden Ansprüche, wobei der thermoplastische Block bzw. die thermoplastischen Blöcke aus der Gruppe bestehend aus thermoplastischen Styrol/Butadien (SB)-, Styrol/ Isopren(SI)-, Styrol/Butadien/Isopren(SBI)-, Styrol/Butadien/Styrol(SBS)-, Styrol/Isopren/ Styrol(SIS)-, Styrol/Butadien/Isopren/Styrol(SBIS-)-Elastomeren und Mischungen dieser Copolymere ausgewählt ist bzw. sind.

11. Reifen nach einem der vorhergehenden Ansprüche, wobei das thermoplastische Elastomer das einzige Elastomer der Unterschicht ist.

12. Reifen nach einem der Ansprüche 1 bis 10, wobei die Unterschicht außerdem ein nicht thermoplastisches Elastomer in einem Gehalt von höchstens 35 phe umfasst.

13. Reifen nach einem der vorhergehenden Ansprüche, wobei die Unterschicht außerdem mindestens ein thermoplastisches Polymer, bei dem es sich nicht um ein Elastomer handelt, umfasst.

14. Reifen nach Anspruch 13, wobei das thermoplastische Polymer aus Poly(para-phenylenether)-Polymeren ausgewählt ist.

15. Reifen nach einem der Ansprüche 13 oder 14, wobei der Gehalt an thermoplastischem Polymer weniger als 40 phe beträgt.

## Claims

1. Radial tyre (1) for a motor vehicle, comprising:
∘ a crown (2) comprising a tread (3) provided with at least a radially outer part (3a) intended to come into contact with the road;
∘ two non-stretchable beads (4), two sidewalls (5) connecting the beads (4) to the tread (3), a carcass reinforcement (6) passing into the two sidewalls (5) and anchored in the beads (4) ;
∘ a crown reinforcement or belt (7) positioned circumferentially between the radially outer part (3a) of the tread (3) and the carcass reinforcement (6);
∘ a radially inner elastomer layer (8) referred to as "underlayer", having a formulation different from the formulation of the radially outer part (3a) of the tread, this underlayer being itself positioned circumferentially between the radially outer part (3a) of the tread (3) and the crown reinforcement (7),
**characterized in that** the said underlayer comprises at least one thermoplastic elastomer, the said thermoplastic elastomer being a block copolymer comprising at least one elastomer block and at least one thermoplastic block, and the total content of thermoplastic elastomer being within a range varying from 65 to 100 phr (parts by weight per hundred parts of elastomer).

2. Tyre according to Claim 1, in which the number-average molecular weight of the thermoplastic elastomer is between 30 000 and 500 000 g/mol.

3. Tyre according to either one of the preceding claims, in which the elastomer block or blocks of the block copolymer are chosen from elastomers having a glass transition temperature of less than 25°C.

4. Tyre according to any one of the preceding claims, in which the elastomer block or blocks of the block copolymer are selected from the group consisting of ethylene elastomers, diene elastomers and their mixtures.

5. Tyre according to any one of the preceding claims, in which the elastomer block or blocks of the block copolymer are chosen from diene elastomers.

6. Tyre according to Claim 5, in which the elastomer block or blocks of the block copolymer are diene elastomers resulting from isoprene, butadiene or a mixture of the latter.

7. Tyre according to any one of the preceding claims, in which the thermoplastic block or blocks of the block copolymer are chosen from polymers having a glass transition temperature of greater than 80°C and, in the case of a semicrystalline thermoplastic block, a melting point of greater than 80°C.

8. Tyre according to any one of the preceding claims, in which the thermoplastic block or blocks of the block copolymer are selected from the group consisting of polyolefins, polyurethanes, polyamides, polyesters, polyacetals, polyethers, polyphenylene sulphides, polyfluorinated compounds, polystyrenes, polycarbonates, polysulphones, polymethyl methacrylate, polyetherimide, thermoplastic copolymers and their mixtures.

9. Tyre according to any one of the preceding claims, in which the thermoplastic block or blocks of the block copolymer are chosen from polystyrenes.

10. Tyre according to any one of the preceding claims, in which the thermoplastic elastomer or elastomers are selected from the group consisting of styrene/butadiene (SB), styrene/isoprene (SI), styrene/butadiene/isoprene (SBI), styrene/butadiene/styrene (SBS), styrene/ isoprene/styrene (SIS) and styrene/butadiene/isoprene/ styrene (SBIS) thermoplastic elastomers and the mixtures of these copolymers.

11. Tyre according to any one of the preceding claims, in which the thermoplastic elastomer is the only elastomer of the underlayer.

12. Tyre according to any one of Claims 1 to 10, in which the underlayer additionally comprises a non-thermoplastic elastomer at a content of at most 35 phr.

13. Tyre according to any one of the preceding claims, in which the underlayer additionally comprises at least one thermoplastic polymer other than an elastomer.

14. Tyre according to Claim 13, in which the thermoplastic polymer is chosen from poly(para-phenylene ether) polymers.

15. Tyre according to either of Claims 13 and 14, in which the content of thermoplastic polymer is less than 40 phr.
